# EUROPÄISCHE PATENTSCHRIFT

(11) **EP 0 607 885 B1**
(45) Veröffentlichungstag und Bekanntmachung des Hinweises auf die Patenterteilung: **01.10.1997**
(21) Anmeldenummer: 94100515.9
(22) Anmeldetag: 14.01.1994
(51) Int. Cl.: F16F 15/08

(54) **Elastische Dämpfungseinrichtung für ein Lager mit Spiel**
Elastic damping arrangement for a support with play in it
Dispositif élastique d'amortissement pour un support avec jeu

(30) Priorität: 18.01.1993 DE 4301099
(43) Veröffentlichungstag der Anmeldung: 27.07.1994
(73) Patentinhaber: ITT Automotive Europe GmbH, 60488 Frankfurt am Main (DE)
(72) Erfinder: Menne, Hans, D-51702 Bergneustadt (DE); Brosinger, Reinhard, D-85051 Ingolstadt (DE)
(74) Vertreter: Hebing, Norbert

(56) Entgegenhaltungen:
- DE-A- 4 004 679
- GB-A- 464 842

## Beschreibung

Die Erfindung betrifft ein in großen Serien gefertigtes Lager mit vergleichsweise großer Toleranz. Wegen des hierdurch für das Lager gegebenen Spiels können die Lagerelemente eine zur Bewegung der Führungsflächen quer gerichtete Bewegung ausführen. Hierdurch ergeben sich bei Vorhandensein entsprechender Kräfte unangenehme Schlag- und Klappergeräusche im Lager. Derartige Probleme treten beispielsweise bei der Verstellung von Sitzen in Kraftfahrzeugen auf, insbesondere bei wechselnder Belastung, wie sie z. B. bei Beschleunigen und bei Abbremsen eines PKW auf den Sitz einwirkt. Eine Möglichkeit zur Beseitung derartiger Geräusche kann beispielsweise darin bestehen, die Toleranzen enger zu wählen, so daß die Geräusche aufgrund des verminderten Spiels herabgesetzt werden. Derartige Maßnahmen sind aber sehr arbeitsaufwendig und damit teuer.

Aus S. Hildebrand "Feinmechanische Bauelemente", Carl Hanser Verlag, 1978, 3. Auflage, Seite 240 und 590 ist es bekannt, mittels einer Feder das Außengewinde einer Schraube gegenüber dem Innengewinde einer Mutter zu verspannen und durch die Vorspannung einer Feder die Bewegung eines Lagers zu blockieren.

Die Erfindung geht daher aus von einem Lager, der sich aus dem Oberbegriff aus dem Anspruch 1 ergebenden Gattung. Aufgabe der Erfindung ist es, die durch das gegebene Spiel der Lagerelemente gegeneinander bedingte Geräuschbelästigung zu vermindern.

Die Aufgabe wird durch die sich aus dem kennzeichnenden Teil des Anspruchs 1 ergebende Merkmalskombination gelöst. Die Erfindung besteht im Prinzip also darin, die beiden Lagerelemente in einer Richtung im Eingriff miteinander zu halten, welche von der geführten Bewegungsrichtung der beiden Lagerelemente gegeneinander abweicht. Dadurch wird der Einfluß der Vorspannung auf den gewünschten Bewegungsablauf im Lager, abgesehen von geringfügigen Reibungskräften, auf ein Minimum herabgesetzt. Die Größe der Vorspannung sollte dabei so gewählt sein, daß auch die größten der der Vorspannkraft entgegenwirkenden Lagerkräfte die durch die Vorspannung in Eingriff gehaltenen Lagerteile nicht voneinander abgehoben werden können, so daß die Lagerteile unabhängig von den auftretenden Querkräften stets miteinander im Eingriff bleiben. Es wird somit bei der Erfindung die dämpfende Spannung nicht erst beim Auftreten der Querkräfte erzeugt, sondern diese ist schon vorab dauerhaft eingerichtet, so daß nicht eine Abhebbewegung der Lagerelemente voneinander bedämpft, sondern das Abheben selber vollkommen vermieden wird.

Einen besonders wirkungsvollen Einsatz für die Erfindung ergibt sich für die nach Anspruch 2 gekennzeichneten Lager. Da hier die Flächenbewegungen der Lagerteile gegeneinander vergleichsweise gering sind, kann auch das Dämpfungselement relativ klein ausgestaltet sein. Hierdurch ergibt sich durch das Dämpfungselement ein nur geringfügiges zusätzliches Gewicht.

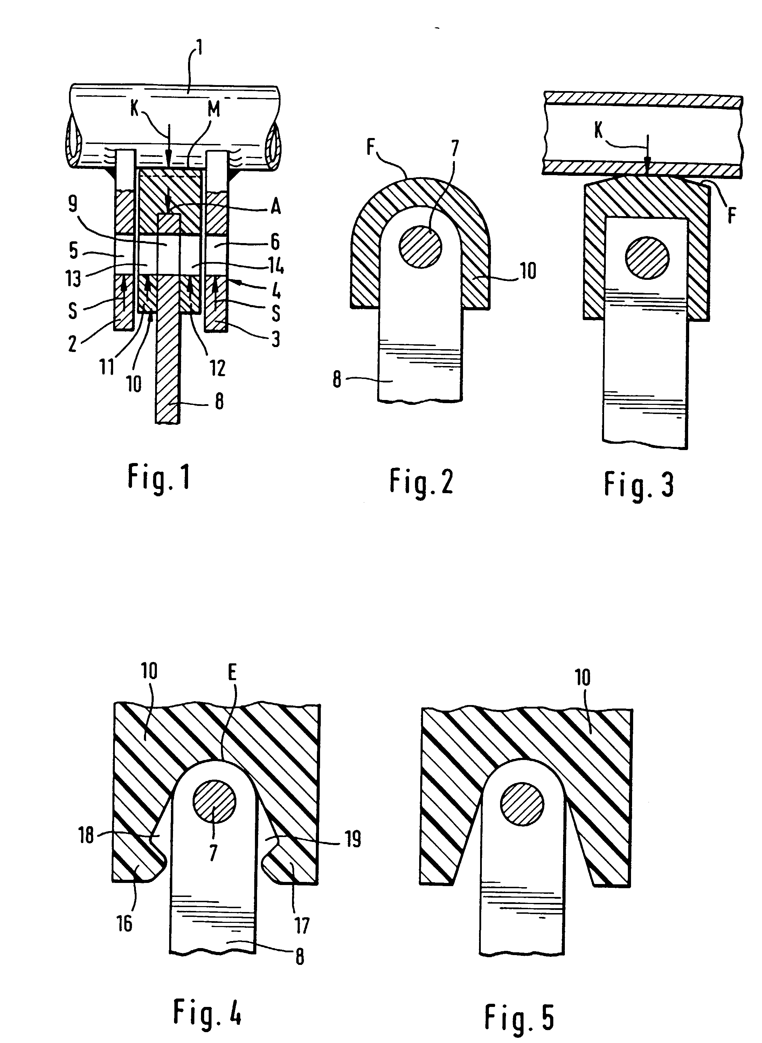

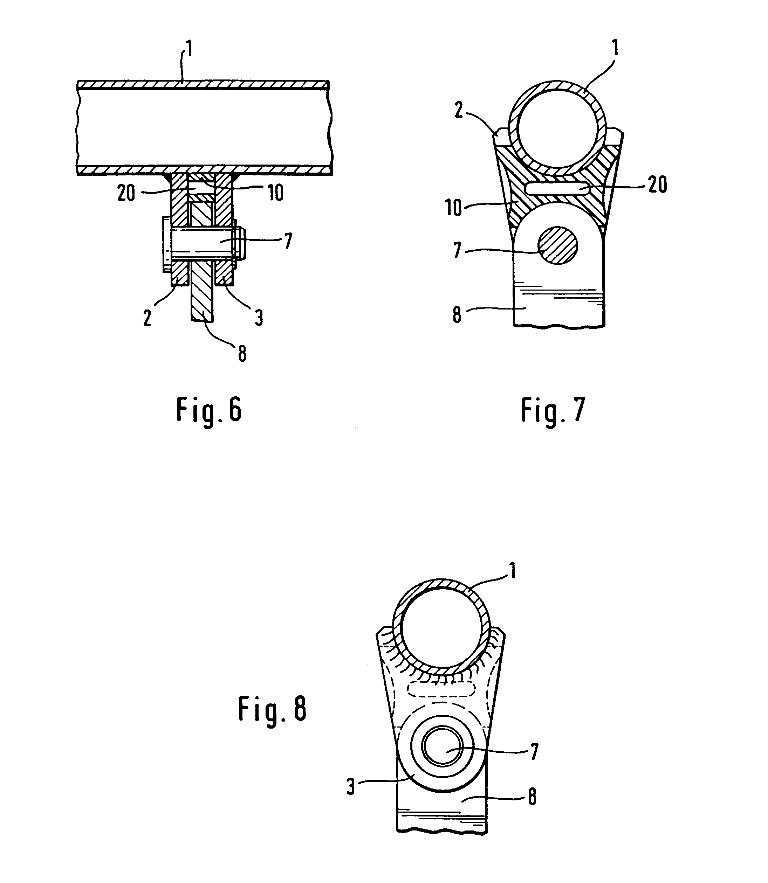

Eine besonders einfache Ausgestaltung für ein derartiges Lager erlaubt die Merkmalskombination nach Anspruch 3, wobei die ortsfeste Abstützung unmittelbar am Lager selbst (Fig. 6, 7), dort aber insbesondere auch an der ortsfesten Lagerwelle (Fig. 1) vorgenommen werden kann.

Die Erfindung ist in Weiterbildung besonders zweckmäßig für ein sich aus Anspruch 4 ergebendes, bewegliches Lagerteil. Dadurch wird erreicht, daß die Kraft in der Hebelebene auf die Stirnfläche des lagerseitigen Endes dieses Hebels ausgeübt wird. Infolgedessen braucht das Dämpfungselement nur eine Höhe (bzw. Breite) zu haben, die der des Hebels entspricht.

Eine besonders wirksame Anwendung der Erfindung ist durch die Merkmalskombination nach Anspruch 5 gegeben (Fig. 1 bis Fig. 7). Dabei werden die beiden Seitenflächen des Hebels durch das Dämpfungselement gemäß Anspruch 6 vorteilhaft umschlossen. Das Ergreifen des lagerseitigen Hebelelementes kann durch ein die beiden Seitenabschnitte des Dämpfungselementes miteinander überbrückendes Brückenteil (Fig. 1), aber auch durch andere konstruktive Ausgestaltungen geschehen, die eine Kraftwirkung der Seitenabschnitte auf den Hebel in radialer Wirkung ermöglichen.

Durch die Erfindung ist es möglich, nicht nur die Relativbewegung der beiden aus festen Materialien bestehenden Lagerteile gegeneinander zu verhindern, sondern zusätzlich auch noch eine dämpfende Anschlagswirkung für das in de geführten Bewegungsebene bewegte Lagerteil zu erreichen (Fig. 4, Fig. 5). Dies geschieht zweckmäßigerweise durch die Merkmale nach Anspruch 7.

Gemäß Anspruch 8 wird eine Möglichkeit geschaffen, die Vorspannkräfte an die auftretenden Querkräfte anzupassen. Durch die vorgeschlagenen Durchbrechungen innerhalb des Dämpfungselementes lassen sich die Vorspannkräfte unabhängig von den durch die Lagergeometrie vorgegebenen Abmessungen an die auftretenden Querkräfte einfach anpassen.

Eine besonders wirksame Anwendung der Erfindung, insbesondere in der Weiterbildung nach Anspruch 6, ergibt sich für eine Lageranordnung gemäß Anspruch 9. Dabei zeigt sich, daß unabhängig davon, ob nun das Spiel zwischen Lagerbolzen und Hebel oder Lagerbolzen und Gabel besteht, die Erfindung gleichwohl wirksam eingesetzt werden kann.

In der Praxis hat sich gezeigt, daß der Verschleiß des Dämpfungselementes aufgrund der Bewegung der Lagerteile gegeneinander sich wirksam durch eine Ausgestaltung nach Anspruch 10 herabsetzen läßt. Danach wird die Reibung zwischen Dämpfungselement und Lager an eine Stelle verlegt, an der der Abrieb des Dämpfungselementes gegenüber dem Lager über eine vergleichsweise große Fläche des Dämpfungselementes erfolgen kann (Fig. 3). Eine weitere Methode zur abhängigen Gestaltung der bedämpfenden Querkräfte gegenüber der Auslenkung der Lagerelemente gegeneinander ist durch die Merkmalskombination nach Anspruch 11 gegeben. Dabei läßt sich eine Art Rastwirkung oder Anschlagwirkung erreichen, in dem beispielsweise die Reibungskräfte zwischen Dämpfungselement und Lagerelement bei großen Auslenkungen vergleichsweise groß werden und somit sich ähnliche Effekte erzielen lassen wie im Zusammenhang mit Anspruch 7 erläutert. Der Anschlag wird aber dabei nicht durch eine Relativbewegung des beweglichen Lagerteils gegenüber dem Dämpfungselement erreicht, sondern durch eine Relativbewegung des Dämpfungselementes gegenüber dem ortsfesten Lagerteil.

Ein Ausführungsbeispiel der Erfindung wird nachfolgend anhand der Zeichnung erläutert.

Dabei zeigt
- Fig. 1: die Abstützung des auf das bewegliche Lagerteil einwirkenden Dämpfungselementes sowohl an dem ortsfesten Bolzen als auch an dem ortsfesten Lagerteil,
- Fig. 2: eine ausschnittsweise geschnittene Darstellung nach der ersten Ausführungsform von Fig. 1,
- Fig. 3: eine ausschnittsweise Darstellung einer zweiten Ausführungsform nach Fig. 1,
- Fig. 4: eine mit seitlichen Anschlägen des Dämpfungselementes versehene Ausführungsform der Erfindung,
- Fig. 5: eine abgewandelte Ausführungsform der Ausgestaltung nach Fig. 4,
- Fig. 6 - 8: in teilweise geschnittener Ansicht eine weitere Ausführungsform mit lagerabhängiger, variabler Vorspannkraft.

Fig. 1 zeigt ein Rohr 1, das beispielsweise zu dem Sitz eines Kraftfahrzeugs gehören kann. An dem Rohr 1 ist ein erstes Lagerblech 2 und ein zweites Lagerblech 3 angeschweißt, die die Gabel für ein Drehlager 4 ergeben. Die beiden Lagerbleche besitzen miteinander fluchtende Führungsaugen 5, 6, durch die ein in Fig. 1 nicht dargestellter Lagerbolzen 7 ragen kann. Um den nicht dargestellten Lagerbolzen 7 ist das Ende eines Hebels 8 schwenkbar. Der Hebel 8 besitzt ebenso wie die Lagerbleche 1, 2 eine Lagerbohrung 9, durch welche der Lagerbolzen 7 ragt.

Es sei nun angenommen, daß zur Vereinfachung der Fertigung zwischen der Lagerbohrung 9 und dem Lagerbolzen 7 sowie wiederum zwischen dem Lagerbolzen 7 und den Führungsaugen 5, 6 ein beträchtliches Spiel herrscht. Damit kann sich der Hebel 8 sehr leicht um die Mittellinie des Lagerbolzens 7 drehen. Bei auf den Hebel 8 gegenüber dem Lager 5 bis 7 ausgeübten wechselnden radialen Kräften ergeben sich allerdings Klappergeräusche, welche sehr störend wirken. Dies ist beispielsweise der Fall, wenn eine an dem Rohrrahmen befestigte Lehne durch äußere Kräfte wechselseitig belastet wird.

Abhilfe schafft hier ein aus Gummi, Plastik oder einem anderen elastischen Stoff gebildetes Dämpfungselement 10, welches das lagerseitige Ende des Hebels 8 formschlüssig umgibt. Das Dämpfungselement 10 besitzt damit eine in Fig. 1 nach unten offene Ausnehmung, in welche das lagerseitige Ende des Hebels eingefügt ist. Das Dämpfungselement besitzt an seinen beiden Schenkeln (Seitenabschnitten) 11, 12 zwei fluchtende Führungsbohrungen 13, 14, durch welche wiederum der Lagerbolzen 7 ragt. Damit wird mit dem Hebel 8 auch das Dämpfungselement 10 um den Lagerbolzen 7 geschwenkt.

Die Abmessungen des Dämpfungselementes 10 in Richtung zum Boden der Gabel und damit zur Oberfläches des Rohres 1 hin sind nun so gewählt, daß eine hinreichende Kraft K radial auf das Dämpfungselement 10 einwirkt, so daß dieses sowohl die Stirnfläche A als auch den Bolzen 7 versucht niederzudrücken. Dabei wird zum einen der Bolzen 7 gegen untere Abschnitte der Führungsaugen 5, 6 gepreßt, so daß die Lagerkräfte S entstehen. Damit ist der Lagerbolzen 7 gegenüber den Führungsaugen 5, 6 vorgespannt. Ein Klappern zwischen Bolzen 7 und Führungsaugen 5, 6 ist somit nicht möglich, obwohl diese genannten Bauelemente mit Spiel zueinander gefertigt sind.

Weiterhin wirkt das Dämpfungselement 10 über die Stirnfläche A auf den Hebel 8, so daß auch der obere Abschnitt der Lagerbohrung 9 des Hebels 8 gegenüber dem in Fig. 1 nicht dargestellten Lagerbolzen 7 vorgespannt ist. Dabei versucht das Dämpfungselement 10 über die Fläche A den Hebel 8 aus der Ausnehmung in dem Dämpfungselement 10 nach unten herauszudrücken. Diese Bewegung wird aber durch den querstehenden Lagerbolzen 7 verhindert, zumal der sich an den Führungsaugen 5, 6 abstützt. Will man aber nun erreichen, daß sowohl der Lagerbolzen gegenüber den Führungsaugen 5, 6 als auch gegenüber dem Hebel 8 eine Klappergeräusche ausschließende Vorspannung erhält, so müssen die Abmessungen derart gelegt werden, daß die in Fig. 1 von oben nach unten auf die Fläche A des Hebels 8 und auf den Lagerbolzen 7 wirkenden Kräfte so groß sind, daß sie den Hebel von oben nach unten gerichtet in Anlage zum Bolzen 7 und diesen wiederum in Anlage von oben nach unten gerichtet zu den Führungsaugen 5, 6 hält.

Dabei ist es so, daß in dieser Richtung das Dämpfungselement 10 nur auf den Hebel 8 und damit indirekt auf den Lagerbolzen 7 einwirkt. Auf diese Weise wird ein direkter Angriff des Dämpfungselementes 10 auf den Führungsbolzen 7 vermieden und man erhält eine eindeutige Bestimmung der dämpfenden wirksamen Kräfte.

Ein Klappern des Hebels 8 gegenüber dem Führungsbolzen 7 kann aber auch dadurch verhindert werden, daß die auf die Stirnfläche A wirkende Kraft versucht, die beiden Schenkel 11, 12 des Dämpfungselementes 10 in Fig. 1 nach oben zu ziehen. Damit läßt sich auch auf diese Weise ein Klappern zwischen Lagerbohrung 9 des Hebels 8 und dem Lagerbolzen 7 verhindern. Dabei muß sich das Dämpfungselement 10 nicht radial am Rohr abstützen (gestrichelte Oberkante). Ein Klappern zwischen Bolzen 7 und Führungsaugen 5, 6 läßt sich so aber nicht verhindern.

Fig. 2 zeigt einen vor dem Hebel 8 liegenden Schnitt durch das Dämpfungselement 10 und den Lagerbolzen 7. Die Fläche F, mit der sich das Dämpfungselement 10 dabei an der Fläche M des Rohres 1 reibend vorbeigleitet, ist dabei abgerundet, so daß eine gleichmäßige radiale Kraft in Richtung Längsachse des Lagerbolzens unabhängig von der Winkelstellung des Hebels 8 ausgeübt wird.

Etwas anders liegt die Konstellation im Zusammenhang mit der Ausgestaltung nach Fig. 3. Hierbei ist die Fläche F im wesentlichen dachförmig, so daß die Reibwirkung mit wachsendem Schwenkwinkel zunimmt. Ansonsten sind die Ausführungsformen nach Fig. 2 und Fig. 3 gleichwertig.

Weiter oben war schon erläutert worden, daß hinsichtlich einer dämpfenden Wirkung zwischen Hebel 8 und Lagerbolzen 7 die Fläche F nicht unbedingt auf die Fläche M des Rohres 1 einwirken muß (gestrichelte Linie in Fig. 1), sondern auch im Abstand von dieser enden kann. Allerdings sind dann keine Dämpfungswirkungen zwischen Lagerbolzen 7 und Lagerblechen 2, 3 durch das Dämpfungselement 10 erreichbar.

Die Ausführungsform nach Fig. 4 unterschiedet sich von der nach Fig. 1 dadurch, daß das Dämpfungselement gegenüber dem Lager 4 fest und damit insgesamt ortsfest angeordnet ist. Der Hebel 8 schwenkt um den Lagerbolzen 7, wobei die Fläche E sich gegenüber der entsprechenden Ausnehmung im Dämpfungselement 10 reibend bewegt.

Das Dämpfungselement 10 besitzt zwei in der Bewegungsebene des Hebels 8 wirksame Vorsprünge 16, 17 gegen die sich ein entsprechender Bereich des Hebels 8 beim Ausschwenken anlegt. Auf diese Weise bilden die Vorsprünge 16, 17, gleichzeitig federnde Anschläge für die Schwenkbewegung des Hebels. Dabei sind die Vorsprünge 16, 17 mit Ausnehmungen 18, 19 versehen, welche die Elastizität der Vorsprünge 16, 17 an die gewünschten Bedingungen anpassen. Das bedeutet, daß die Elastizität aufgrund der Schwächung des Materials der Vorsprünge 16 und 17 größer wird und damit die dämpfende Kraft verringert wird.

Im Zusammenhang mit Fig. 5 besteht der Unterschied der dort gezeigten Ausführungsform nur darin, daß auf die Ausnehmungen 18, 19 verzichtet wurde.

Die Ausgestaltung nach den Figuren 6, 7 ist der nach den Fig. 1 und 3 weitgehend vergleichbar. Der wesentliche Unterschied besteht darin, daß das Dämpfungselement ausschließlich von in Fig. 6 bzw. 7 von oben nach unten gerichteter Radialkräfte auf den Hebel 8 ausübt, wodurch, wie weiter oben schon erwähnt, indirekt der Lagerbolzen 7 gegen die Augen der Lagerbleche 2, 3 unter Vorspannung gehalten wird. Ein anderer wesentlicher Unterschied besteht darin, daß in dem Dämpfungselement ein sich längs erstreckender durchgehender Freiraum 20 vorgesehen ist. Durch diese Durchbrechung werden die auf den Hebel 8 einwirkenden Kräfte vermindert, so daß sich hierdurch die Wirkung der Vorspannkräfte einstellen läßt.

Fig. 8 zeigt in Ergänzung zu Fig. 7 eine Draufsicht auf das Lager, wobei das Lagerblech 3 zu erkennen ist, welches zur besseren Anschaulichkeit in Fig. 7 weggelassen wurde. Wie aus Fig. 8 zu erkennnen, sind die Lagerbleche mit dem Rohr 1 verschweißt. Durch Strichlinien ist angedeutet, daß die äußere Kontur des Hebels 8 lagerseitig im wesentlichen kreisförmig ist.

## Patentansprüche

1. Lager (4) mit einem ortsfesten Lagerteil (2 bis 7) und einem in dem ortsfesten Lagerteil (2 bis 7) mit Spiel geführten beweglichen Lagerteil (8), wobei das bewegliche Lagerteil (8) eine auf das ortsfeste Lagerteil (2 bis 7) gerichtete, wechselnde Kraft ausübt, dadurch **gekennzeichnet,** daß ein aus einem elastischen Material bestehendes Dämpfungselement (10) vorgesehen ist, welches sich einerseits ortsfest (F) abstützt und andererseits unter Vorspannung an den beweglichen Lagerteil (8) angreift, wobei das Dämpfungselement (10) eine Kraft auf die einander im Eingriff befindlichen Lagerflächenbereiche ausübt, die im Winkel, vorzugsweise senkrecht, zur geführten Relativbewegung der Lagerflächenbereiche zueinander steht.

2. Lager nach Anspruch 1 dadurch **gekennzeichnet**, daß es ein Drehlager ist, und daß das Dämpfungselement (10) auf das bewegliche Lagerteil (8) in radialer Richtung einwirkt.

3. Lager nach Anspruch 1 oder 2 dadurch **gekennzeichnet**, daß das Dämpfungselement (10) sich an dem ortsfesten Lagerteil (2 bis 7), insbesondere dem ortsfesten Lagerbolzen (7), abstützt.

4. Lager nach einem der vorangegangenen Ansprüche dadurch **gekennzeichnet**, daß das bewegliche Lagerteil (8) ein auf einem ortsfesten Bolzen (7) drehbar gelagerter Hebel ist, und daß das Dämpfungselement (10) das lagerseitige Hebelende zumindest in der Ebene des Hebels (8) umfaßt.

5. Lager nach einem der vorangegangenen Ansprüche dadurch **gekennzeichnet**, daß der Drehhebel (8) in einer Gabel (1 bis 3) drehbar gelagert ist, deren Arme (2, 3) sich zu beiden Seiten des Hebels (8) erstrecken und das Dämpfungselement (10) am gelagerten Hebelende angreift und sich mit seinem anderen Ende am Boden (K) der Gabel (1 bis 3) unter Vorspannung abstützt.

6. Lager nach einem der vorangegangenen Ansprüche dadurch **gekennzeichnet**, daß das Ende des Hebels (8) in Längsrichtung des Bolzens (7) von Seitenabschnitten (2, 3) des Dämpfungselements (10) beidseitig umfaßt wird und dabei das lagerseitige Hebelende (M, F) ergriffen wird und weiterhin sich die Seitenabschnitte zu beiden Seiten des Hebels an dem Bolzen abstützen.

7. Lager nach einem der vorangegangenen Ansprüche dadurch **gekennzeichnet**, daß das Dämpfungselement (10) mindestens einen, sich in der Drehebene des Hebels seitlich erstreckenden Ansatz (16 bzw. 17) aufweist, der die Drehbewegung des Hebels (8) elastisch begrenzt.

8. Lager nach einem der vorangegangenen Ansprüche dadurch **gekennzeichnet**, daß das Dämpfungselement (10) mit Ausnehmungen (18, 19, 20) versehen ist, die die Elastizität des Dämpfungselementes (10) örtlich vergrößern.

9. Lager nach einem der vorangegangenen Ansprüche dadurch **gekennzeichnet**, daß der Hebel (8) über einen Zylinderbolzen (7) drehbar in der Gabel gelagert ist und daß der Hebel (8) gegenüber dem Bolzen und/oder der Bolzen (7) gegenüber den Lageraugen (5, 6) an den Armen (2, 3) der Gabel ein Spiel aufweist.

10. Lager nach einem der vorangegangenen Ansprüche dadurch **gekennzeichnet**, daß das bewegliche Lagerteil (8) formschlüssig mit dem Dämpfungselement (10) verbunden ist.

11. Lager nach Anspruch 10 dadurch **gekennzeichnet**, daß das mit dem beweglichen Lagerteil (8) sich bewegende Dämpfungselement (10) mit sich ändernden Flächenabschnitten (F) an dem ortsfesten Lagerteil (1 bis 7) angreift, wobei Flächenabschnitte (F) derart geformt sind, daß Richtung und Größe der Vorspannkraft sich in Abhängigkeit von der Bewegung des beweglichen Lagerteils (8) ändern.

## Claims

1. Bearing (4) including a stationary bearing part (2 to 7) and a movable bearing part (8) which is guided with a clearance in the stationary bearing part (2 to 7), wherein the movable bearing part (8) exerts a varying force directed to the stationary bearing part (2 to 7),
**characterized** in that a damping element (10), made of an elastic material, is supported stationarily (F), on the one hand, and makes catch under preload at the movable bearing part (8), on the other hand, wherein the damping element (10) exerts a force on the engaged areas of bearing surfaces which is at an angle, preferably vertical, to the guided relative movement of the areas of bearing surfaces.

2. Bearing as claimed in claim 1,
**characterized** in that the bearing is a journal bearing, and in that the damping element (10) acts on the movable bearing part (8) in a radial direction.

3. Bearing as claimed in claim 1 or 2,
**characterized** in that the damping element (10) is supported on the stationary bearing part (2 to 7), in particular on the stationary bearing pin (7).

4. Bearing as claimed in any one of the preceding claims, **characterized** in that the movable bearing part (8) is a lever which is pivoted on a stationary pin (7), and in that the damping element (10) embraces the lever end close to the bearing at least in the plane of the lever (8).

5. Bearing as claimed in any one of the preceding claims,
**characterized** in that the pivoting lever (8) is pivoted in a fork (1 to 3) having arms (2, 3) which extend on either side of the lever (8), and the damping element (10) makes catch on the supported lever end and, with its other end, is supported under preload on the bottom (K) of the fork (1 to 3).

6. Bearing as claimed in any one of the preceding claims,
**characterized** in that the end of the lever (8), in the longitudinal direction of the pin (7), is on either side embraced by lateral portions (2, 3) of the damping element (10) and the lever end (M, F) close to the bearing is engaged, and, further, the lateral portions are supported on the pin on either side of the lever.

7. Bearing as claimed in any one of the preceding claims,
**characterized** in that the damping element (10) has at least one projection (16 or 17) which laterally extends in the plane of rotation of the lever and elastically limits the rotation of the lever (8).

8. Bearing as claimed in any one of the preceding claims,
**characterized** in that the damping element (10) includes recesses (18, 19, 20) which locally increase the elasticity of the damping element (10).

9. Bearing as claimed in any one of the preceding claims,
**characterized** in that the lever (8) is pivoted in the fork by way of a cylindrical pin (7), and in that the lever (8) has a clearance with respect to the pin and/or the pin (8) has a clearance with respect to the bearing lugs (5, 6) on the arms (2, 3) of the fork.

10. Bearing as claimed in any one of the preceding claims,
**characterized** in that the movable bearing part (8) is in positive engagement with the damping element (10).

11. Bearing as claimed in claim 10,
**characterized** in that the damping element (10) which moves with the movable bearing part (8), with varying surface areas (F), makes catch at the stationary bearing part (1 to 7), and the surface areas (F) are so shaped that the direction and the magnitude of the preloading force vary as a function of the movement of the movable bearing part (8).

## Revendications

1. Palier (4), comprenant une partie de palier fixe (2 à 7) et une partie de palier mobile (8) guidée avec un jeu dans la partie de palier fixe (2 à 7), la partie de palier mobile (8) exerçant une force alternée dirigée sur la partie de palier fixe (2 à 7), caractérisée en ce qu'il est prévu un élément d'amortissement (10), constitué d'une matière élastique, qui, d'une part, prend appui d'une manière fixe (F) et, d'autre part, attaque sous précontrainte la partie de palier mobile (8), l'élément d'amortissement (10) exerçant, sur les zones de surface de palier se trouvant en prise l'une avec l'autre, une force qui fait un angle, de préférence droit, vis-à-vis du déplacement relatif guidé des zones de surface de palier l'une vis-à-vis de l'autre.

2. Palier selon la revendication 1, caractérisé en ce qu'il s'agit d'un palier de basculement et en ce que l'élément d'amortissement (10) exerce son action sur la partie de palier mobile (8) suivant une direction radiale.

3. Palier selon la revendication 1 ou 2, caractérisé en ce que l'élément d'amortissement (10) prend appui sur la partie de palier fixe (2 à 7), notamment l'axe de palier fixe (7).

4. Palier selon l'une des revendications précédentes, caractérisé en ce que la partie de palier mobile (8) est un levier monté basculant sur un axe fixe (7) et en ce que l'élément d'amortissement (10) entoure l'extrémité de palier du levier au moins dans le plan du levier (8).

5. Palier selon l'une des revendications précédentes, caractérisé en ce que le levier basculant (8) est monté basculant dans une fourche (1 à 3) dont les bras (2, 3) s'étendent des deux côtés du levier (8) et en ce que l'élément d'amortissement (10) est en prise sur l'extrémité de levier montée à palier et s'appuie sous précontrainte, par son autre extrémité, sur le fond (K) de la fourche (1 à 3).

6. Palier selon l'une des revendications précédentes, caractérisé en ce que l'extrémité du levier (8) est entourée des deux côtés, suivant la direction longitudinale de l'axe (7), par des sections latérales (2, 3) de l'élément d'amortissement (10) et l'extrémité de palier (M, F) du levier est ainsi prise et en outre, les sections latérales de part et d'autre du levier prennent appui sur l'axe.

7. Palier selon l'une des revendications précédentes, caractérisé en ce que l'élément d'amortissement (10) comporte au moins une partie en saillie (16 ou 17) qui s'étend sur le côté dans le plan de basculement du levier et qui limite élastiquement le déplacement de basculement du levier (8).

8. Levier selon l'une des revendications précédentes, caractérisé en ce que l'élément d'amortissement (10) est pourvu d'évidements (18, 19, 20) qui accroissent localement l'élasticité de l'élément d'amortissement (10).

9. Palier selon l'une des revendications précédentes, caractérisé en ce que le levier (8) est monté basculant dans la fourche par l'intermédiaire d'un axe cylindrique (7) et en ce que le levier (8) présente un jeu vis-à-vis de l'axe et/ou l'axe (7) présente un jeu vis-à-vis des oeils de palier (5, 6) prévus sur les branches (2, 3) de la fourche.

10. Palier selon l'une des revendications précédentes, caractérisé en ce que la partie de palier mobile (8) est reliée par complémentarité de formes à l'élément d'amortissement (10).

11. Palier selon la revendication 10, caractérisé en ce que l'élément d'amortissement (10) qui se déplace avec la partie de palier mobile (8) attaque la partie de palier fixe (1 à 7) par des sections de surface (F) qui varient, les sections de surfaces (F) ayant une forme telle que la direction et l'intensité de la force de précontrainte varient en fonction du déplacement de la partie de palier mobile (8).
